(19) Europäisches Patentamt
European Patent Office
Office européen des brevets

(11) **EP 4 163 177 B1**

(12) **EUROPÄISCHE PATENTSCHRIFT**

(45) Veröffentlichungstag und Bekanntmachung des Hinweises auf die Patenterteilung:
**19.06.2024   Patentblatt 2024/25**

(21) Anmeldenummer: **22199060.9**

(22) Anmeldetag: **30.09.2022**

(51) Internationale Patentklassifikation (IPC):
**B60W 30/18** (2012.01)      **B62M 6/00** (2010.01)
**B60W 30/045** (2012.01)      **B60W 10/08** (2006.01)
**B60W 10/188** (2012.01)      **B62J 45/00** (2020.01)

(52) Gemeinsame Patentklassifikation (CPC):
**B60W 40/10; B60T 8/1706; B60T 8/171; B60W 10/08; B60W 10/188; B60W 30/045; B60W 30/18109; B60W 30/18172; B62J 45/41; B62L 3/023; B62M 6/50; G01P 3/487; G01P 21/02;** B60T 2230/03; B60W 2050/0026;          (Forts.)

(54) **VERFAHREN ZUM BETREIBEN EINES ZWEIRADS, SOWIE ZWEIRAD**

METHOD FOR OPERATING A TWO-WHEELED VEHICLE, AND TWO-WHEELED VEHICLE

PROCÉDÉ DE CONTRÔLE D'UN DEUX-ROUES, ET DEUX-ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2021   DE 102021211390**

(43) Veröffentlichungstag der Anmeldung:
**12.04.2023   Patentblatt 2023/15**

(73) Patentinhaber: **Robert Bosch GmbH
70442 Stuttgart (DE)**

(72) Erfinder:
• **Klug, Silas
71106 Magstadt (DE)**
• **Dauer, Felix
72074 Tuebingen (DE)**
• **Widmaier, Georg
71229 Leonberg (DE)**
• **Moia, Alessandro
71088 Holzgerlingen (DE)**

• **Heil, Steffen
72793 Pfullingen (DE)**
• **Maier, Oliver
70186 Stuttgart (DE)**
• **Nakamura, Atsushi
Niigata-Shi 950-0327 (JP)**
• **Baumgaertner, Daniel
72072 Tuebingen (DE)**

(56) Entgegenhaltungen:
DE-A1-102013 215 293      JP-A- H0 995 287
US-A1- 2018 197 401

(52) Gemeinsame Patentklassifikation (CPC): (Forts.)
B60W 2050/0031; B60W 2050/0033;
B60W 2300/36; B60W 2520/105; B60W 2520/125;
B60W 2520/14; B60W 2520/16; B60W 2520/18;
B60W 2520/28; B60W 2552/15; B60W 2710/083;
B60W 2710/182; B62J 45/413; G01C 22/002

**Beschreibung**

Stand der Technik

Die vorliegende Erfindung betrifft ein Verfahren zum Betreiben eines Zweirads, sowie ein Zweirad.

Bekannt sind Zweiräder mit Antriebseinheiten und Antiblockier-Systemen. Eine Steuerung der Antriebseinheit und des Antiblockierer-Systems erfolgt dabei häufig zumindest teilweise in Abhängigkeit von Bewegungsgrößen, wie einer Geschwindigkeit, des Zweirads. Derartige Bewegungsgrößen werden üblicherweise mittels Sensorsystemen des Zweirads erfasst. Bekannt sind außerdem Sensorsysteme, mittels welchen Bewegungsgrößen, wie Geschwindigkeit, zurückgelegte Strecken, Beschleunigungen und Drehraten von Zweirädern erfasst werden können. Insbesondere bei Fahrrädern erfolgt eine Erfassung der Geschwindigkeit dabei häufig mittels sogenannter Reed-Sensoren. Dabei ist üblicherweise ein Magnet an einem Rad des Fahrrads befestigt. Mittels eines an einem Rahmen des Fahrrads befestigten Magnetsensors wird pro Umdrehung des Rads ein Puls erfasst, um basierend auf einer Frequenz der Pulse und dem Radumfang die Geschwindigkeit des Fahrrads zu ermitteln. Aus Gründen von Kosten, Einfachheit und Gewicht wird dabei häufig nur ein einpulsiger Sensor mit einem einzelnen Magneten am Rad verwendet. Dadurch ist jedoch insbesondere bei niedrigen Geschwindigkeiten häufig eine hohe Ungenauigkeit vorhanden. Bekannt ist auch, die Genauigkeit durch mehrpulsige Sensoren zu erhöhen, wodurch jedoch die Komplexität, Kosten und Gewicht steigen. Die Dokumente DE 10 2013 215293 A1 sowie JP H09 95287 A offenbaren die Steuerung des Motormoments eines Zweirads abhängig von einem gemessenen Lenkwinkel.

Offenbarung der Erfindung

Das erfindungsgemäße Verfahren mit den Merkmalen des Anspruchs 1 zeichnet sich demgegenüber durch eine besonders einfache und kostengünstige Methode aus, mit welcher sehr präzise Bewegungsgrößen eines Zweirads ermittelt und zur Steuerung einer Antriebseinheit und/oder eines Antiblockier-Systems mit hoher Präzision verwendet werden können. Insbesondere kann dabei auch bei sehr niedrigen Geschwindigkeiten eine hohe Genauigkeit erreicht werden. Dies wird erfindungsgemäß erreicht durch ein Verfahren zum Betreiben eines Zweirads, wobei das Zweirad eine Antriebseinheit, vorzugsweise ein Antiblockier-System, und ein Sensorsystem umfasst. Bevorzugt ist die Antriebseinheit ein Elektromotor. Das Sensorsystem weist einen Drehratensensor, einen Beschleunigungssensor, und einem Raddrehzahlsensor auf. Der Raddrehzahlsensor ist dabei insbesondere ein Umdrehungssensor, und ausgebildet, um pro Umdrehung eines Rads des Zweirads mindestens einen Messpuls zu detektieren. Vorzugsweise ist der Raddrehzahlsensor ein einpulsiger Reed-Sensor, welcher genau einen Magneten, der am Rad befestigt ist und mit dem Rad rotiert, aufweist, und insbesondere einen Empfänger, der bei einem Passieren des Magneten genau einen Messpuls detektiert. Das Verfahren umfasst dabei die folgenden Schritte:

- Erfassen von, insbesondere dreidimensionalen, Drehraten des Zweirads mittels des Drehratensensors,
- Erfassen von Beschleunigungswerten des Zweirads mittels des Beschleunigungssensors,
- Abschätzen eines Bewegungszustands des Zweirads basierend auf den erfassten Drehraten,
  wobei der Bewegungszustand Schätzwerte für geschätzte Beschleunigungswerte und für eine geschätzte Geschwindigkeit und für eine geschätzte zurückgelegte Strecke umfasst,
- erstes Korrigieren des geschätzten Bewegungszustands basierend auf den erfassten Beschleunigungswerten,
- Ermitteln eines momentanen Lenkwinkels des Zweirads basierend auf dem korrigierten geschätzten Bewegungszustand, und
- Betätigen der Antriebseinheit und/oder des Antiblockier-Systems in Abhängigkeit des ermittelten momentanen Lenkwinkels.

Als Schätzwerte werden insbesondere ermittelte bzw. berechnete Werte der jeweiligen Kenngrößen, also der geschätzten Beschleunigungswerte, der geschätzten Geschwindigkeit, und der geschätzten zurückgelegten Strecke, angesehen. Mit anderen Worten wird als Schätzwert insbesondere ein Zahlenwert, vorzugsweise inklusive der entsprechenden Maßeinheit, angesehen. Insbesondere umfasst der Bewegungszustand pro derartiger Kenngröße jeweils einen separaten Schätzwert. Insbesondere werden die Schätzwerte durch das Verfahren iterativ optimiert, um basierend darauf die gewünschten Kenngrößen ermitteln zu können.

Bevorzugt werden mittels des Drehratensensors dreidimensionale Drehraten erfasst, welche jeweils eine Drehrate um eine Längsachse, welche insbesondere in Fahrtrichtung ausgerichtet ist, um eine vertikale Hochachse, und um eine Nickachse, welche senkrecht zur Längsachse und Hochachse ist, umfassen.

Mit anderen Worten werden bei dem Verfahren mittels des Drehratensensors die, insbesondere dreidimensionalen, Drehraten erfasst und basierend auf diesen ein allgemeiner Bewegungszustand des Zweirads, welcher auch weitere Bewegungsgrößen, wie die geschätzte Geschwindigkeit und die geschätzte zurückgelegte Strecke, umfasst, abgeschätzt. Anschließend wird dieser geschätzte Bewegungszustand basierend auf den zusätzlich vorhandenen Beschleunigungswerten des Beschleunigungssensors korrigiert, insbesondere basierend auf einem Vergleich der geschätzten Beschleunigungswerte mit den tatsächlichen Beschleunigungswerten. Insbesondere können hierbei die geschätzten Beschleunigungswerte direkt anhand der vorhandenen gemessenen Beschleunigungswerte korrigiert werden. Zugleich werden, vorzugsweise basierend auf diesem Korrekturschritt, die weiteren Bewegungsgrößen des Bewegungszustands korrigiert, beispielsweise die geschätzte Geschwindigkeit und die geschätzte zurückgelegte Strecke. Anhand des korrigierten Bewegungszustands kann anschließend der momentanen Lenkwinkel des Zweirads ermittelt werden.

Als Lenkwinkel wird dabei ein Winkel zwischen einer Längsrichtung des Zweirads und einem Vorderrad des Zweirads, projiziert auf eine Ebene senkrecht zur Hochachse, also beispielsweise auf eine Untergrundebene, angesehen.

Bevorzugt wird der Lenkwinkel stets als Betrag ermittelt. Das heißt, eine Auslenkung des Rades nach links oder rechts führt jeweils zu einem bestimmten positiven Wert des Lenkwinkels.

Das Verfahren zeichnet sich somit dadurch aus, dass mit vergleichsweise einfacher und kostengünstiger Sensorik besonders umfangreiche und präzise Bewegungsgrößen über die Bewegung des Fahrrads ermittelt werden können. Insbesondere kann dabei zur Erfassung genauer und hochaufgelöster Lenkwinkel auch bei niedrigen Geschwindigkeiten auf eine aufwändige und teure Sensorik verzichtet werden, was sich besonders vorteilhaft in der Anwendung an einem Fahrrad auswirkt.

Durch die Verwendung des präzisen und hochaufgelösten Lenkwinkels kann somit eine besonders präzise und optimal an unterschiedlichste Bedingungen angepasste Betätigung der Antriebseinheit und/oder des Antiblockier-Systems erfolgen. Insbesondere beim Durchfahren von Kurven mit kleinem Radius und/oder bei Bremsmanövern, vor allem bei langsamer Geschwindigkeit, kann dabei eine besonders genaue Abstimmung derart erfolgen, dass beispielsweise gefährliche Fahrsituationen vermieden werden können.

Es sei angemerkt, dass das Zweirad im Falle einer Lenkwinkel-abhängigen Betätigung ausschließlich der Antriebseinheit auch ohne Antiblockier-System ausgebildet sein kann.

Die Unteransprüche haben bevorzugte Weiterbildungen der Erfindung zum Inhalt.

Bevorzugt umfasst das Verfahren ferner den Schritt, wenn in Abhängigkeit des ermittelten momentanen Lenkwinkels ein Betätigen der Antriebseinheit erfolgt: Anpassen eines Antriebsdrehmoments der Antriebseinheit. Besonders vorteilhaft ist dies, wenn das Zweirad ein Elektrofahrrad ist, wobei die Antriebseinheit vorgesehen ist zur Erzeugung eines Antriebsdrehmoments, welches zur Unterstützung einer manuellen Tretkraft des Fahrers des Elektrofahrrads verwendet wird. Mit anderen Worten kann hierbei eine lenkwinkelabhängige Unterstützung bereitgestellt werden. Durch Anpassung des Antriebsdrehmoments in Abhängigkeit des momentanen Lenkwinkels kann besonders zuverlässig vermieden werden, dass aufgrund eines nicht an den aktuellen Fahrbetrieb, beispielsweise ein Kurven- oder Wendemanöver, angepassten Antriebsmoments eine verringerte Kontrollierbarkeit oder eine kritische Situation auftritt. Besonders vorteilhaft ist es hierfür, wenn bei dem Verfahren bei hohen Lenkwinkeln, beispielsweise größer oder gleich 10°, eine Reduzierung eines maximal erlaubten Antriebsdrehmoments erfolgt.

Besonders bevorzugt wird das Antriebsdrehmoment basierend auf einer Lookup-Tabelle angepasst, wobei die Lookup-Tabelle einen vordefinierten Antriebsdrehmoment-Verlauf in Abhängigkeit des Lenkwinkels umfasst. Dadurch kann auf besonders einfache und kostengünstige Weise eine lenkwinkelabhängige Unterstützung bereitgestellt werden.

Vorzugsweise ist die Lookup-Tabelle derart ausgebildet, dass der Antriebsdrehmoment-Verlauf bis zu einem vordefinierten maximalen Lenkwinkel, vorzugsweise von maximal 10°, konstant ist. Bei einem Lenkwinkel, der größer als der vordefinierte maximale Linkwinkel ist, ist der Antriebsdrehmoment-Verlauf linear abhängig vom Lenkwinkel, bevorzugt derart, dass bei steigendem Lenkwinkel das Antriebsdrehmoment sinkt. Dadurch kann ein besonders vorteilhafter und komfortabler Fahrbetrieb bereitgestellt werden, welcher bei niedrigen Lenkwinkeln eine maximale Antriebsleistung erlaubt, und bei höheren Lenkwinkeln zuverlässig das Antriebsdrehmoment reduziert, um kritische Fahrsituationen vermeiden zu können.

Weiter bevorzugt umfasst das Verfahren ferner den Schritt: Ermitteln einer momentanen Steigung einer Fahrbahn, auf der sich das Zweirad befindet. Das Antriebsdrehmoment wird dabei zusätzlich in Abhängigkeit der ermittelten Steigung angepasst. Insbesondere wird das Antriebsdrehmoment dabei derart in Abhängigkeit der Steigung angepasst, dass bei hoher positiver Steigung, welche das Zweirad beispielsweise hinauffährt, mindestens ein vordefiniertes Mindest-Antriebsdrehmoment bereitgestellt wird. Dadurch kann verhindert werden, dass die lenkwinkelabhängige Unterstützung das Antriebsmoment so weit reduziert, dass ein komfortables Fahren bei hoher Steigung verhindert würde.

Bevorzugt umfasst das Verfahren ferner den Schritt, wenn in Abhängigkeit des momentanen Lenkwinkels ein Betätigen des Antiblockier-Systems erfolgt:
Anpassen eines Bremsdrucks in einem, vorzugsweise hydraulischen, Bremssystem des Zweirads. Vorteilhafterweise wird dabei ein Bremsdruck, insbesondere ein maximaler Bremsdruck während eines Antiblockier-Betriebs derart angepasst, dass dieser bei hohem oder steigenden Lenkwinkel reduziert wird. Das heißt, bei der Regelung des Bremsdrucks durch das Antiblockier-System wird zusätzlich der Lenkwinkel betrachtet, um besonders effiziente und zugleich sichere Bremsmanöver zu ermöglichen.

Besonders bevorzugt umfasst das Anpassen des Bremsdrucks ein Regeln eines Druckgradienten des Bremsdrucks, das heißt einer zeitlichen Änderung des Bremsdrucks, insbesondere während eines Antiblockier-Betriebs. Besonders bevorzugt erfolgt dabei ein Regeln eines Sensitivitätsfaktors und/oder eines Maximal-Drucks des Druckgradienten. Dadurch kann eine besonders feine Abstimmung des Antiblockier-Betriebs an die aktuellen Fahrbedingungen des Zweirads ermöglicht werden

Vorzugsweise umfasst das Anpassen des Bremsdrucks ferner: Regeln eines Reifenschlupfes während einer Bremsung des Zweirads. Dadurch kann eine weitere, optimal an den Untergrund und an die aktuellen Fahrbedingungen des Zweirads angepasste Antiblockier-Regelung ermöglicht werden.

Weiter bevorzugt umfasst das Verfahren ferner den Schritt: Ermitteln einer momentanen Geschwindigkeit des Zweirads und/oder einer mit dem Zweirad zurückgelegten Strecke basierend auf dem korrigierten Bewegungszustand. Bevorzugt kann das Betätigen der Antriebseinheit und/oder des Antiblockier-Systems dabei zusätzlich in Abhängigkeit der ermittelten momentanen Geschwindigkeit des Zweirads und/oder in Abhängigkeit der mit dem Zweirad zurückgelegten Strecke erfolgen.

Bevorzugt umfasst das Verfahren ferner den folgenden Schritt: zweites Korrigieren des Bewegungszustands basierend auf den mittels des Raddrehzahlsensors detektierten Messpulsen. Bevorzugt erfolgt das zweite Korrigieren jedes Mal, wenn ein mittels des Raddrehzahlsensors detektierter Messpuls vorliegt. Dadurch kann eine besonders hohe Genauigkeit der Ermittlung der Bewegungsgrößen erfolgen, da mittels der vom Raddrehzahlsensor detektierten Messpulse, immer wenn solche Messpulse vorliegen, besonders genaue Daten zur Verfügung stehen und zur Optimierung des Bewegungszustands verwendet werden können.

Besonders bevorzugt wird das zweite Korrigieren basierend auf folgender Gleichung durchgeführt: $y2 = [x5, old + 2\pi r]$ . Dabei ist y2 ein korrigierter Wert für eine mit dem Zweirad zurückgelegte Strecke, x5,old ein alter, das heißt zeitlich zurückliegender, Wert für die mit dem Zweirad zurückgelegte Strecke, und r ein Radius eines Rads des Zweirads. Insbesondere ist y2 dabei die geschätzte zurückgelegte Strecke des Bewegungszustandes. Mit anderen Worten wird zu jedem Zeitpunkt, zu welchem ein Messpuls des Raddrehzahlsensors vorliegt, die geschätzte zurückgelegte Strecke des Bewegungszustands durch den genauen Messwert des Raddrehzahlsensors ersetzt.

Vorzugsweise werden basierend auf dem korrigierten Bewegungszustand eine oder mehrere der folgenden Bewegungsgrößen des Zweirads ermittelt: Rollwinkel, Nickwinkel, und Längsbeschleunigung. Dadurch kann besonders genau Aufschluss über die aktuelle Fortbewegung des Zweirads gewonnen werden.

Weiter bevorzugt wird das erste Korrigieren mittels eines nichtlinearen Kalman-Filters durchgeführt. Dadurch kann auf einfache Weise eine besonders effiziente und präzise Korrektur des Bewegungszustands durchgeführt werden.

Vorzugsweise wird das Abschätzen des Bewegungszustands des Zweirads mittels eines Zustandsvektors

$$x = \begin{bmatrix} x1 \\ x2 \\ x3 \\ x4 \\ x5 \end{bmatrix}$$ , mittels eines Eingangsvektors $$u = \begin{bmatrix} u1 \\ u2 \\ u3 \end{bmatrix}$$ , und basierend auf folgender Systemgleichung durchgeführt:

$$\dot{x} = \begin{bmatrix} u1 + \tan(x2)\sin(x1)\,u2 + \tan(x2)\cos(x1)\,u3 \\ \cos(x1)\,u2 - \sin(x1)u3 \\ 0 \\ x3 \\ x4 \end{bmatrix}.$$

Insbesondere kann der Eingangsvektor u dabei als Eingang der Systemgleichung x angesehen werden. Dabei sind: x1 ein Rollwinkel, x2 ein Nickwinkel, x3 eine Längsbeschleunigung, x4 eine Längsgeschwindigkeit, und x5 eine zurückgelegte Strecke. Weiterhin sind u1, u2, und u3 die dreidimensionalen Drehraten. Insbesondere entspricht dabei die Systemgleichung x einer zeitlichen Änderung des Bewegungszustands.

Bevorzugt erfolgt das Abschätzen des Bewegungszustands des Zweirads basierend auf einer Berechnung eines Integrals der Systemgleichung x. Insbesondere können dabei nach der Integration der Systemgleichung direkt die entsprechend gewonnenen Bestandteile des Bewegungszustands als abgeschätzte Werte für die Beschleunigungswerte, die Geschwindigkeit, und die zurückgelegte Strecke verwendet werden.

Weiter bevorzugt wird das Abschätzen des Bewegungszustands des Zweirads ferner basierend auf den folgenden Gleichungen durchgeführt:

$$Rx = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\dot{\psi} = \frac{(u2\,\sin(x1) + u3\,\cos(x1))}{\cos(x2)},$$

$$y1 = Rx\,Ry \begin{bmatrix} x3 \\ -x4\,\dot{\psi} \\ g \end{bmatrix}.$$

Dabei ist $\dot{\psi}$ eine Gierrate des Zweirads, und y1 sind die geschätzte Beschleunigungswerte y1 des Zweirads. Als Gierrate wird insbesondere eine Drehgeschwindigkeit des Zweirads um die Längsachse angesehen. Insbesondere erfolgt dabei das erste Korrigieren dadurch, dass die geschätzten Beschleunigungswerte y1 korrigiert werden.

Vorzugsweise umfasst das Verfahren ferner den Schritt: Ermitteln eines Stillstands des Zweirads basierend auf dem abgeschätzten Bewegungszustand. Bevorzugt kann dabei zusätzlich zwischen insgesamt drei Fahrmodi unterschieden werden: Stillstand, Fahren, und Transition. Vorzugsweise können die Fahrmodi anhand vordefinierter Schwellwerte, beispielsweise der geschätzten Geschwindigkeit, ermittelt werden. Dadurch kann besonders einfach und eindeutig Aufschluss über einen aktuellen Fahrzustand des Zweirads gewonnen werden. Zudem können die ermittelten Fahrzustände, wie der Stillstand, genutzt werden, um weitere Optimierungen des Verfahrens zur Erhöhung der Genauigkeit des Ermittelns des Bewegungszustands durchführen zu können.

Weiter bevorzugt umfasst das Verfahren ferner die Schritte:

- Reduzieren des Zustandsvektors x und der Systemgleichung x auf die folgenden Zustände: $x = \begin{bmatrix} x1 \\ x2 \end{bmatrix}$ und

$$\dot{x} = \begin{bmatrix} u1 + \tan(x2)\sin(x1)\,u2 + \tan(x2)\cos(x1)\,u3 \\ \cos(x1)\,u2 - \sin(x1)u3 \end{bmatrix},$$

wenn von dem Raddrehzahlsensor über mindestens einen vordefinierten Zeitraum keine Messpulse detektiert werden oder wenn ein Stillstand des Fahrzeugs ermittelt wurde, und

- Erweitern des Zustandsvektors x und der Systemgleichung x auf die ursprünglichen Zustände vor dem Reduzieren, wenn von dem Raddrehzahlsensor erneut Messpulse detektiert werden.

Das heißt, bei einem Stillstand, oder wenn der Raddrehzahlsensor aus einem anderen Grund keine Messpulse detektiert, werden der Zustandsvektor x und die Systemgleichung x auf die jeweiligen ersten beiden Zustände reduziert. Dadurch kann ein Abdriften der geschätzten Werte des Bewegungszustands, was auftreten kann, wenn aufgrund eines nicht vorliegenden Geschwindigkeitssignals keine Korrektur möglich ist, vermieden werden.

Bevorzugt erfolgt das Ermitteln des Lenkwinkels $\delta$ basierend auf folgender Gleichung: $\delta = \arctan\left(\frac{\dot{\psi}\,L}{x4}\right)$, mit der Gierrate $\dot{\psi}$, einem Radstand L des Zweirads, und der einer Längsgeschwindigkeit x4. Insbesondere entspricht der Radstand einem Abstand zwischen den beiden Radnaben bzw. Achsen des Zweirads. Bevorzugt ist dabei zusätzlich vorgesehen, die Berechnung dieser Gleichung derart durchzuführen, dass der Ausdruck im Nenner keine Werte um Null annimmt, um dadurch auftretende numerische Probleme zu vermeiden. Vorzugsweise wird hierfür eine ermittelte Minimalgeschwindigkeit als Längsgeschwindigkeit x4 verwendet. Bevorzugt wird die Berechnung des Lenkwinkels nur während einer erkannten Fahrt des Zweirads durchgeführt, und insbesondere bei einem erkannten Stillstand des Zweirads verhindert.

Weiterhin führt die Erfindung zu einem Zweirad, umfassend eine Antriebseinheit, ein Antiblockier-System, und ein Sensorsystem, welches einen Drehratensensor, einen Beschleunigungssensor, und einem Raddrehzahlsensor aufweist. Zudem umfasst das Zweirad eine Steuervorrichtung, welche eingerichtet ist zur Durchführung des beschriebenen Verfahrens zum Betreiben des Zweirads. Zusätzlich ist die Steuervorrichtung eingerichtet, die Antriebseinheit das Antiblockiersystem steuerbar zu betätigen. Vorzugsweise ist der Raddrehzahlsensor ein einpulsiger Reed-Sensor, welcher genau einen Magneten, der am Rad befestigt ist und mit dem Rad rotiert, aufweist. Das Zweirad zeichnet sich dabei dadurch aus, dass die Bewegungsgrößen mit hoher zeitlicher Auflösung und hoher Genauigkeit bei besonders einfachem um kostengünstigen Aufbau des Sensorsystems ermittelt werden können. Basierend auf diesen Bewegungsgrößen kann dabei eine besonders präzise und optimal abgestimmte Betätigung der Antriebseinheit und/oder des Antiblockier-Systems erfolgen.

Bevorzugt ist das Zweirad als ein elektrisch angetriebenes, insbesondere und/oder antreibbares, Fahrrad ausgebildet, welches insbesondere auch als Elektrofahrrad bezeichnet werden können.

Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:

Figur 1    eine vereinfachte schematische Ansicht eines Zweirads mit einem Sensorsystem und eine Steuervorrichtung zur Durchführung eines Verfahrens gemäß einem bevorzugten Ausführungsbeispiel der Erfindung,

Figur 2    eine alternative Ansicht des Zweirads der Figur 1 zur Verdeutlichung eines Lenkwinkels,

Figur 3    eine alternative Ansicht des Zweirads der Figur 1 zur Verdeutlichung einer Schräglage,

Figur 4    eine vereinfachte schematische Ansicht einer Durchführung des Verfahrens gemäß dem bevorzugten Ausführungsbeispiel der Erfindung, und

Figur 5    eine vereinfachte schematische Ansicht einer Lookup-Tabelle, welche bei der Durchführung des Verfahrens gemäß einem bevorzugten Ausführungsbeispiel der Erfindung verwendet wird.

Bevorzugte Ausführungsformen der Erfindung

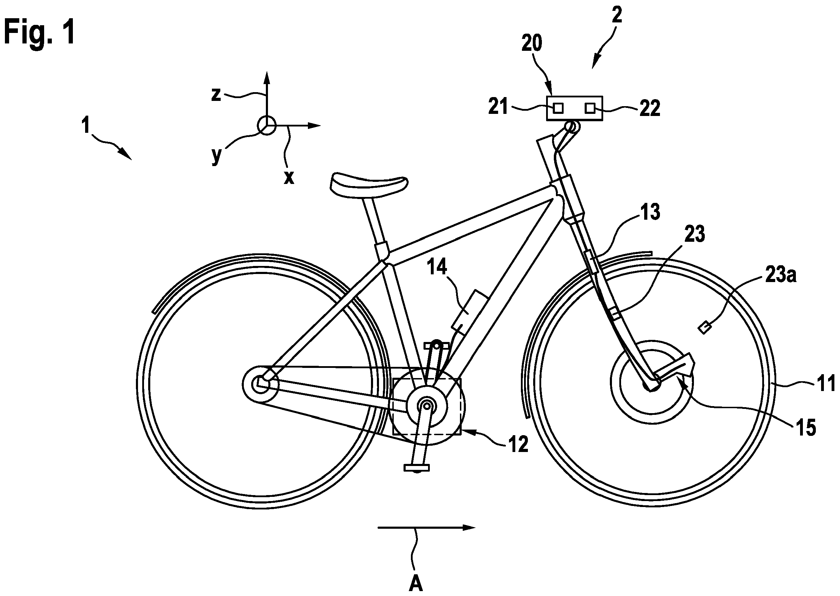

Figur 1 zeigt eine vereinfachte schematische Ansicht eines Zweirads 1 mit einem Sensorsystem 2 und einer Steuervorrichtung 20 zur Durchführung eines Verfahrens zum Ermitteln von Bewegungsgrößen des Zweirads 1 gemäß einem bevorzugten Ausführungsbeispiel der Erfindung.

Bei dem Zweirad 1 handelt es sich um ein Elektrofahrrad, welches im Bereich eines Tretlagers eine Antriebseinheit 12 aufweist, mittels welcher eine manuell erzeugte Tretkraft eines Fahrers des Zweirads 1 motorisch unterstützt werden kann. Die Antriebseinheit 12 wird dabei von einem elektrischen Energiespeicher 14 mit elektrischer Energie versorgt.

Zudem umfasst das Zweirad 1 ein Antiblockier-System 13, welches eingerichtet ist, ein hydraulisches Bremssystem 15 des Zweirads 1 zu betätigen. Dabei ist das Antiblockier-System 13 in einem Antiblockier-Betrieb betreibbar, in welchem das Antiblockier-System 13 eine Druckmodulation eines hydraulischen Bremsdrucks in dem hydraulischen Bremssystem 15 durchführt, um bei einem Bremsmanöver ein Blockieren des Rads 11 zu verhindern. Das Antiblockiersystem 13 ist insbesondere mit der Steuervorrichtung 20 verbunden und mittels der Steuervorrichtung 20 betätigbar.

Die Steuervorrichtung 20 ist an einem Lenker des Zweirads 1 angeordnet, und kann beispielsweise Teil eines Bordcomputers sein.

Das Sensorsystem 2 umfasst mehrere Sensoren. Im Detail umfasst das Sensorsystem 2 einen Drehratensensor 21 und einen Beschleunigungssensor 22, welche beide in die Steuervorrichtung 20 integriert sind.

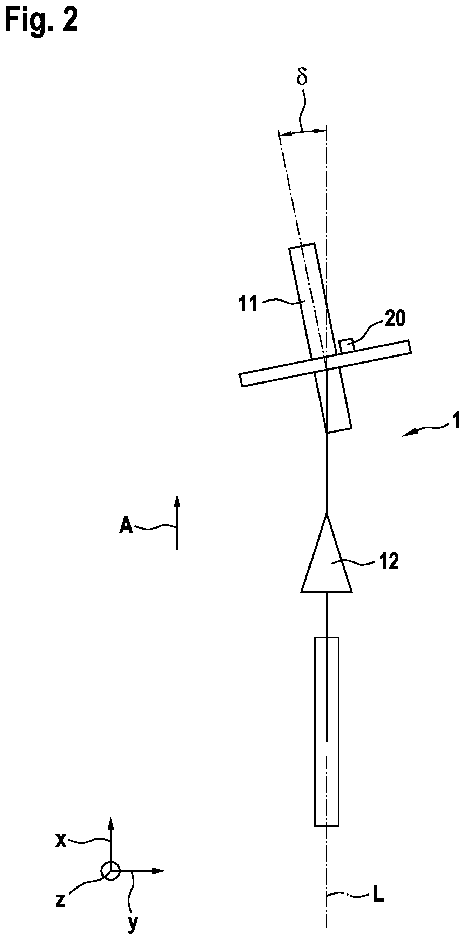

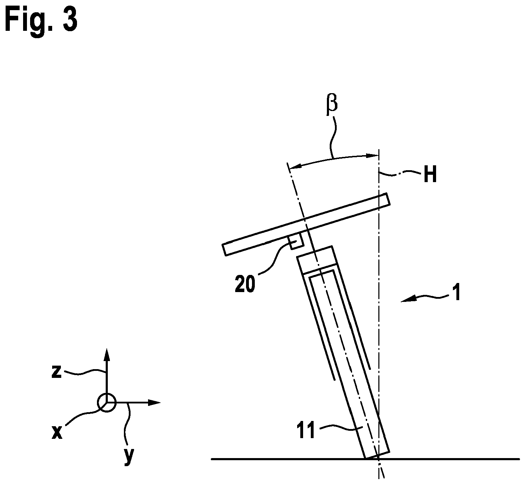

Mittels des Drehratensensors 21 werden dreidimensionale Drehraten des Zweirads 1 während einer Fahrt erfasst. Dabei werden jeweils eine Drehrate um die in der Figur 1 angedeuteten Achsen x, y, z (vergleiche auch Figuren 2 und 3) erfasst.

Die x-Achse ist dabei parallel zu einer Längsachse L des Zweirads 1 (siehe Figur 2), welche bei Geradeausfahrt des Zweirads 1 parallel zu einer Fahrtrichtung A ist. Die z-Achse entspricht einer vertikalen Hochachse H (siehe Figur 3), welche insbesondere parallel zu einer (nicht dargestellten) Gravitationsrichtung eines Erdschwerefelds ist. Die y-Achse ist senkrecht zur x-Achse und senkrecht zur z-Achse. Die y-Achse kann auch als Nickachse bezeichnet werden. Weiterhin kann die z-Achse auch als Gierachse bezeichnet werden.

Mittels des Beschleunigungssensors 22 werden Beschleunigungswerte des Zweirads 1 erfasst, vorzugsweise insgesamt drei Beschleunigungswerte jeweils entlang jeder der Achsen x, y, z.

Ferner umfasst das Sensorsystem 2 einen einpulsigen Raddrehzahlsensor 23, welcher als Umdrehungssensor ausgebildet ist, um pro Umdrehung eines Rads 11 des Zweirads 1 genau einen Messpuls zu detektieren. Hierfür ist der Raddrehzahlsensor eingerichtet, um bei jedem Passieren eines Magnets 23a, welcher beispielsweise an einer Speiche des Rads 11 befestigt ist, pro Umdrehung des Rads 11 genau einmal den Messpuls zu detektieren. Basierend auf den mittels des Raddrehzahlsensors 23 detektierten Messpulsen kann somit eine Drehzahl des Rads 11 ermittelt werden.

Als Bewegungsgrößen des Zweirads 1 werden dabei mittels des Verfahrens 50 eine momentane Geschwindigkeit des Zweirads 1, eine zurückgelegte Strecke, und ein momentaner Lenkwinkel $\delta$ ermittelt.

Der Lenkwinkel $\delta$ ist in der Figur 2 verdeutlicht. Figur 2 zeigt dabei eine Ansicht des Zweirads 1 entlang der z-Achse. Wie in der Figur 2 zu erkennen, entspricht der Lenkwinkel $\delta$ einem Winkel zwischen der Längsachse L und dem Vorderrad 11. Bei Geradeausfahrt ist der Lenkwinkel $\delta$ gleich Null, und entsprechend höher, je kleiner ein Kurvenradius der Kurve, welche von dem Zweirad 1 durchfahren wird.

Bei einer Kurvenfahrt mit dem Zweirad 1 wird das Zweirad 1 wie in der Figur 3 dargestellt, in eine Schräglage gebracht. Figur 3 zeigt dabei schematisch einen Neigungswinkel β des Zweirads 1. Der Neigungswinkel β ist hierbei der Winkel, um welchen das Zweirad 1 aus der Hochachse H geneigt ist.

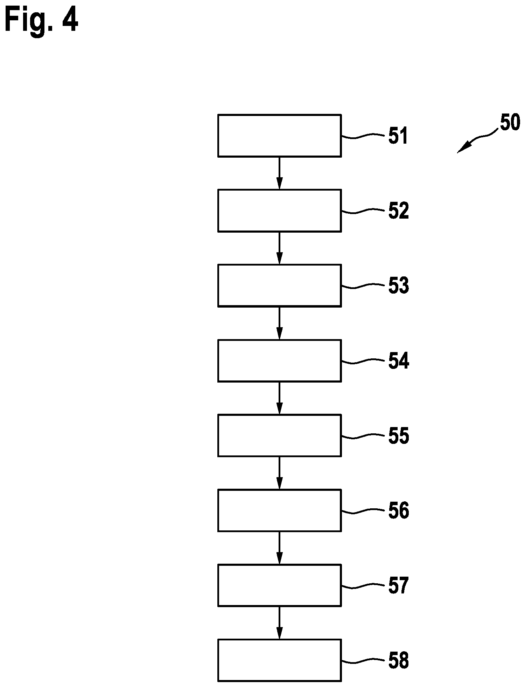

Die Durchführung des Verfahrens 50 zum Betreiben des Zweirads 2 mit dem Ermitteln der Bewegungsgrößen des Zweirads 1 wird nachfolgend in Bezug auf die Figur 4 beschrieben.

Bei dem Verfahren 50 erfolgt zunächst ein Erfassen 51 der dreidimensionalen Drehraten des Zweirads 1 mittels des Drehratensensors 21. Gleichzeitig erfolgt ein Erfassen 52 der Beschleunigungswerte des Zweirads 1 mittels des Beschleunigungssensors 22. Basierend auf den erfassten dreidimensionalen Drehraten erfolgt anschließend ein Abschätzen 53 eines Bewegungszustands des Zweirads 1.

Der Bewegungszustand des Zweirads 1 umfasst dabei Schätzwerte für geschätzte Beschleunigungswerte und für eine geschätzte Geschwindigkeit und außerdem für eine geschätzte zurückgelegte Strecke. Im Detail erfolgt das Abschätzen des Bewegungszustands mittels eines Zustandsvektors, welcher die folgenden Parameter aufweist: Rollwinkel, Nickwinkel, Längsbeschleunigung, Längsgeschwindigkeit, und zurückgelegte Strecke. Insbesondere entspricht der Rollwinkel dabei dem Neigungswinkel β, also einer Auslenkung bzw. einer Drehung des Zweirads 1 um die Längsachse H. Vorzugsweise entspricht der Nickwinkels einer Auslenkung bzw. Drehung des Zweirads 1 um die y-Achse, also quer zur Längsachse H.

Basierend auf dem Zustandsvektor und einem Eingangsvektor, wobei der Eingangsvektor die dreidimensionalen Drehraten aufweist, wird nachfolgend eine Systemgleichung erstellt, welche insbesondere eine zeitliche Änderung des Zustandsvektors darstellt.

Anschließend erfolgt das Abschätzen 53 des Bewegungszustands des Zweirads 1 durch Berechnung eines Integrals der Systemgleichung. Dadurch liegen die geschätzten Bewegungsgrößen des Zweirads 1 vor.

Anschließend erfolgen Korrekturschritte 54, 55 des Bewegungszustands. Zunächst erfolgt ein erstes Korrigieren 54 des Bewegungszustands basierend auf den mittels des Beschleunigungssensors 22 tatsächlich erfassten Beschleunigungswerten.

Zusätzlich erfolgt ein zweites Korrigieren 55 des Bewegungszustands jedes Mal, wenn ein Messpuls des Raddrehzahlsensors 23 detektiert wird. Im Detail wird hierbei der Bewegungszustand basierend auf der mittels des Raddrehzahlsensors 23 ermittelten tatsächlich zurückgelegte Strecke korrigiert. Da aufgrund des geometrischen Zusammenhangs der Messpulse über den Radumfang des Rads 11 die tatsächlich zurückgelegte Strecke sehr genau bestimmt werden kann, kann mittels des zweiten Korrigierens 55 ein besonders genauer Korrekturschritt des Bewegungszustands durchgeführt werden.

Anschließend kann basierend auf dem korrigierten Bewegungszustand das Ermitteln 57 des Lenkwinkels $\delta$ des Zweirads 1 erfolgen.

Das Verfahren 50 kann außerdem in einer (nicht dargestellten) Abwandlung durchgeführt werden, welche zusätzlich einen Stillstand des Zweirads 1 berücksichtigt. Dabei erfolgt zusätzlich ein Ermitteln eines Stillstands des Zweirads 1 basierend auf dem abgeschätzten Bewegungszustand.

Wenn ein Stillstand des Zweirads 1 ermittelt wurde, können der Zustandsvektor und die Systemgleichung auf die ersten beiden Zustände reduziert werden. Dadurch kann vermieden werden, dass die geschätzten Bewegungsgrößen durch Nichtvorhandensein eines Messpulses, welcher zum zweiten Korrigieren 55 verwendet werden kann, mit fortschreitender Zeit abdriften. Sobald ermittelt wurde, dass sich das Zweirad 1 wieder fortbewegt, oder sobald wieder einen Messpuls mittels des Raddrehzahlsensors 23 detektiert wurde, werden der Zustandsvektor und die Systemgleichung wieder auf die ursprünglichen Zustände vor dem Reduzieren erweitert, sodass anschließend wieder eine genaue Bestimmung sämtlicher Bewegungsgrößen ermöglicht wird.

Alternativ zu einem Stillstand des Zweirads 1 kann auch ein Nicht-Vorhandensein eines Messpulses des Raddrehzahlsensors 23 zum Reduzieren des Zustandsvektors und der Zustandsgleichung auf die ersten beiden Zustände verwendet werden.

Der einfach oder zweifach korrigierte Bewegungszustand weist somit besonders genaue Schätzwerte für die Bewegungsgrößen des Zweirads 1 auf. Insbesondere kann dadurch anhand des korrigierten Bewegungszustands zu jedem beliebigen Zeitpunkt eine gewünschte Bewegungsgröße, wie beispielsweise die Geschwindigkeit, abgelesen und beispielsweise für weitere Systeme oder Verfahren des Zweirads 1 verwendet werden. Weiterhin können durch das Verfahren 50 die Bewegungsgrößen des Zweirads 1 auch bei sehr niedrigen Geschwindigkeit präzise ermittelt werden, da das Verfahren 50 insbesondere auf den Messwerten des Drehratensensors 21 und des Beschleunigungssensors 22 basiert, welche auch bei niedrigen Geschwindigkeiten präzise und zuverlässige Messwerte liefern können.

Die ermittelten Bewegungsgrößen, insbesondere der Lenkwinkel $\delta$ wird bei dem Zweirad 1 verwendet zum Betätigen 58 der Antriebseinheit 12 sowie des Antiblockier-Systems 13, wie nachfolgend beschrieben.

Das Betätigen 58 der Antriebseinheit 12 erfolgt dabei derart, dass ein von der Antriebseinheit 12 erzeugtes Antriebsdrehmoment in Abhängigkeit des ermittelten momentanen Lenkwinkels $\delta$ angepasst wird. Das Anpassen des Antriebsdrehmoments erfolgt dabei basierend auf einer Lookup-Tabelle 30.

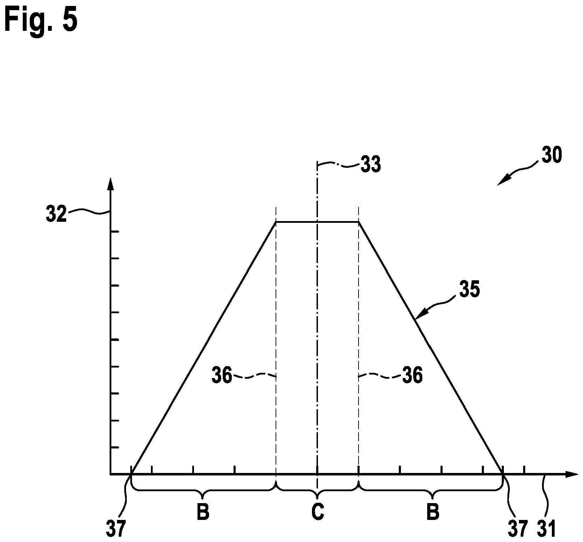

Die Lookup-Tabelle 30 ist in der Figur 5 dargestellt. Dargestellt ist dabei die Lookup-Tabelle 30 in Form eines Diagramms, welches das Antriebsmoment 32 über dem Lenkwinkel 31 darstellt. Bei der Achse 33 liegt dabei ein Lenkwinkel $\delta$ von 0° vor.

Die Lookup-Tabelle 30 umfasst dabei einen vordefinierten Antriebsdrehmoment-Verlauf 35, welcher das einzustellende Antriebsdrehmoment in Abhängigkeit des ermittelten Lenkwinkels $\delta$ definiert. Der Antriebs-Drehmomentverlauf 35 ist dabei symmetrisch bezüglich des 0°-Lenkwinkels.

Wie in der Figur 5 zu erkennen, ist der Antriebsdrehmoment-Verlauf 35 innerhalb des Bereichs C konstant, wobei das maximal mögliche Antriebsdrehmoment zur Verfügung gestellt werden kann. Der Bereich C reicht bis zu einem maximalen Lenkwinkel $\delta$ von 10°, jeweils durch die gestrichelten Linien 36 gekennzeichnet.

Bei einem Lenkwinkel $\delta$ größer als 10° beginnen jeweils, also bei Lenkung in beide Richtungen links und rechts, die Bereiche B. In den Bereichen B. liegt eine lineare Abhängigkeit des Antriebsdrehmoment-Verlaufs 35 vom Lenkwinkel $\delta$ ab. Das heißt, bei steigendem Lenkwinkel $\delta$ sinkt das maximale Antriebsdrehmoment proportional. Ist der Lenkwinkel $\delta$ größer oder gleich dem Lenkwinkel $\delta$ an den Punkten 37, welche beispielsweise bei einem Lenkwinkel $\delta$ von 45° liegen, so wird das maximal mögliche Antriebsdrehmoment auf Null gesetzt. Das heißt, ab einem Lenkwinkel $\delta$ von mindestens 45° kann die Antriebseinheit 12 gar kein Antriebsdrehmoment mehr erzeugen.

Zusätzlich kann vorgesehen sein, dass das Antriebsdrehmoment der Antriebseinheit 12 in Abhängigkeit einer momentanen Steigung einer Fahrbahn, auf der sich das Zweirad 1 befindet, angepasst wird. Die Steigung kann beispielsweise direkt mittels des Sensorsystems 2 und/oder basierend auf dem berechneten Bewegungszustand des Zweirads 2 ermittelt werden. Vorzugsweise wird dabei bei Überschreiten einer vordefinierten Steigung weiterhin ein Mindest-Antriebsdrehmoment der Antriebseinheit 12 bereitgestellt, um für den Fahrer einen komfortablen Motor-unterstützten Fahrbetrieb zu ermöglichen.

Ferner erfolgt bei dem Verfahren 50 zum Betreiben des Zweirads 1 ein Betätigen 58 des Antiblockier-Systems 13 in Abhängigkeit des ermittelten momentanen Lenkwinkels $\delta$. Hierbei wird ein Druckgradient eines Bremsdrucks, welchen das Antiblockier-System 13 in dem hydraulischen Bremssystem 15 während eines Antiblockier-Betriebs erzeugt, in Abhängigkeit des ermittelten Lenkwinkels $\delta$ angepasst. Besonders vorteilhaft für ein optimales Bremsverhalten ist dabei, wenn ein Sensitivitätsfaktor und ein Maximal-Druck des Druckgradienten während einer durch das Antiblockier-System 13 durchgeführten Druckmodulation in dem hydraulischen Bremssystem 15 basierend auf dem ermittelten momentanen Lenkwinkel $\delta$ angepasst werden. Zusätzlich kann ein Regeln eines Reifenschlupfes während der Bremsung des Zweirads 1 in Abhängigkeit des momentanen Lenkwinkels $\delta$ durchgeführt werden.

Vorzugsweise kann für ein besonders einfaches Verfahren das Anpassen des Bremsdrucks zur Vermeidung kritischer Situationen, beispielsweise in engen Kurven, bei steigendem Lenkwinkel $\delta$ der maximal im hydraulischen Bremssystem 15 erlaubte Bremsdruck reduziert werden. Dadurch kann in engen Kurven ein zu starkes Bremsen, welches zu einem Blockieren oder Rutschen des Rads 11 führen könnte, vermieden werden. Dadurch, dass für das Betätigen 58 des Antiblockier-Systems 13 der basierend auf dem Bewegungszustand abgeschätzte Lenkwinkel $\delta$ verwendet wird, kann ein für Kurvenfahrten mit Zweirädern 1 optimierter Antiblockier-Betrieb mit besonders einfachen und kostengünstigen Mitteln bereitgestellt werden, da beispielsweise auf aufwändige und teure Sensorik, wie Schräglagensensoren oder dergleichen, verzichtet werden kann.

**Patentansprüche**

**1.** Verfahren zum Betreiben eines Zweirads (1),

- wobei das Zweirad (1) eine Antriebseinheit (12) und ein Sensorsystem (2) umfasst,
- wobei das Sensorsystem (2) einen Drehratensensor (21), einen Beschleunigungssensor (22), und einen Raddrehzahlsensor (23) aufweist,
- wobei der Raddrehzahlsensor (23) ausgebildet ist, um pro Umdrehung eines Rads (11) des Zweirads (1) mindestens einen Messpuls zu detektieren, und
- wobei das Verfahren die Schritte umfasst:

- Erfassen (51) von, insbesondere dreidimensionalen, Drehraten des Zweirads (1) mittels des Drehratensensors (21),
- Erfassen (52) von Beschleunigungswerten des Zweirads (1) mittels des Beschleunigungssensors (22),
- Abschätzen (53) eines Bewegungszustands des Zweirads (1) basierend auf den erfassten Drehraten,

- wobei der Bewegungszustand Schätzwerte für geschätzte Beschleunigungswerte und für eine geschätzte Geschwindigkeit und für eine geschätzte zurückgelegte Strecke umfasst,
- erstes Korrigieren (54) des geschätzten Bewegungszustands basierend auf den erfassten Beschleunigungswerten, **dadurch gekennzeichnet, dass** das Verfahren weiterhin die folgenden Schritte umfasst:

- Ermitteln (56) eines momentanen Lenkwinkels ($\delta$) des Zweirads (1) basierend auf dem korrigierten geschätzten Bewegungszustand, und
- Betätigen (58) der Antriebseinheit (12) und/oder eines Antiblockier-Systems (13) des Zweirads (1) in Abhängigkeit des ermittelten momentanen Lenkwinkels ($\delta$).

2. Verfahren nach Anspruch 1, wobei das Betätigen (58) der Antriebseinheit (12) umfasst:

- Anpassen eines Antriebsdrehmoments der Antriebseinheit (12).

3. Verfahren nach Anspruch 2, wobei das Antriebsdrehmoment der Antriebseinheit (12) basierend auf einer Lookup-Tabelle (30), welche einen vordefinierten Antriebsdrehmoment-Verlauf (35) in Abhängigkeit des Lenkwinkels umfasst, angepasst wird.

4. Verfahren nach Anspruch 3, wobei der Antriebsdrehmoment-Verlauf (35) bis zu einem vordefinierten maximalen Lenkwinkel (36), insbesondere von maximal 10°, konstant ist, und wobei der Antriebsdrehmoment-Verlauf (35) bei einem Lenkwinkel ($\delta$) größer als der vordefinierte maximale Lenkwinkel (36) linear abhängig vom Lenkwinkel ($\delta$) ist.

5. Verfahren nach einem der Ansprüche 2 bis 4, ferner umfassend den Schritt:

- Ermitteln einer momentanen Steigung einer Fahrbahn, auf der sich das Zweirad (1) befindet,

wobei das Antriebsdrehmoment der Antriebseinheit (12) zusätzlich in Abhängigkeit der Steigung angepasst wird.

6. Verfahren nach einem der vorhergehenden Ansprüche, wobei das Betätigen (58) des Antiblockier-Systems (13) umfasst:

- Anpassen eines Bremsdrucks in einem Bremssystem des Zweirads (1)

7. Verfahren nach Anspruch 6, wobei das Anpassen eines Bremsdrucks umfasst:

- Regeln eines Druckgradienten des Bremsdrucks, insbesondere eines Sensitivitätsfaktors und/oder eines Maximal-Drucks, des Druckgradienten.

8. Verfahren nach Anspruch 6 oder 7, wobei das Anpassen des Bremsdrucks umfasst:

- Regeln eines Reifenschlupfes während einer Bremsung des Zweirads (1).

9. Verfahren nach einem der vorhergehenden Ansprüche, ferner umfassend den Schritt:

- Ermitteln (57) einer momentanen Geschwindigkeit des Zweirads (1) und/oder einer mit dem Zweirad (1) zurückgelegten Strecke basierend auf dem korrigierten geschätzten Bewegungszustand.

10. Verfahren nach einem der vorhergehenden Ansprüche, ferner umfassend den Schritt:

- zweites Korrigieren (55) des geschätzten Bewegungszustands basierend auf den mittels des Raddrehzahlsensors (23) detektierten Messpulsen.

11. Verfahren nach Anspruch 5, wobei das zweite Korrigieren (55) basierend auf folgender Gleichung durchgeführt wird:

$$y2 = [x5, old + 2\,\pi\,r]$$

mit einem korrigierten Wert für eine mit dem Zweirad (1) zurückgelegte Strecke y2, einem alten Wert für eine mit dem Zweirad (1) zurückgelegte Strecke x5,old, und einem Radius r eines Rads (11) des Zweirads (1).

12. Verfahren nach einem der vorhergehenden Ansprüche, wobei basierend auf dem korrigierten geschätzten Bewegungszustand einer oder mehrere der folgenden Bewegungsgrößen des Zweirads (1) ermittelt werden: Rollwinkel, Nickwinkel, Längsbeschleunigung, und zurückgelegte Strecke.

13. Verfahren nach einem der vorhergehenden Ansprüche, wobei das erste Korrigieren (54) mittels eines nichtlinearen Kalman-Filters.

14. Verfahren nach einem der vorhergehenden Ansprüche, wobei das Abschätzen (53) des Bewegungszustands des

$$x = \begin{bmatrix} x1 \\ x2 \\ x3 \\ x4 \\ x5 \end{bmatrix}$$

Zweirads (1) mittels eines Zustandsvektors , mit einem Rollwinkel x1, einem Nickwinkel x2, einer Längsbeschleunigung x3, einer Längsgeschwindigkeit x4, und einer zurückgelegten Strecke x5, und mittels eines

$$u = \begin{bmatrix} u1 \\ u2 \\ u3 \end{bmatrix}$$

Eingangsvektors , mit den dreidimensionalen Drehraten u1, u2, und u3, und basierend auf folgender Systemgleichung erfolgt:

$$\dot{x} = \begin{bmatrix} u1 + \tan(x2)\sin(x1)\, u2 + \tan(x2)\cos(x1)\, u3 \\ \cos(x1)\, u2 - \sin(x1)u3 \\ 0 \\ x3 \\ x4 \end{bmatrix},$$

- wobei das Abschätzen (53) des Bewegungszustands des Zweirads (1) basierend auf einer Berechnung eines Integrals der Systemgleichung x erfolgt,
- wobei das Abschätzen (53) des Bewegungszustands des Zweirads (1) ferner basierend auf den folgenden Gleichungen durchgeführt wird:

$$Rx = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\dot{\psi} = \frac{(u2\,\sin(x1) + u3\,\cos(x1))}{\cos(x2)},$$

$$y1 = Rx\, Ry \begin{bmatrix} x3 \\ -x4\,\dot{\psi} \\ g \end{bmatrix},$$

mit einer Gierrate $\dot{\psi}$ des Zweirads (1), und den geschätzten Beschleunigungswerten y1 des Zweirads (1).

15. Zweirad, insbesondere elektrisch angetriebenes Fahrrad, umfassend:

- eine Antriebseinheit (12),

- ein Antiblockier-System (13)
- ein Sensorsystem (2), welches einen Drehratensensor (21), einen Beschleunigungssensor (22), und einen Raddrehzahlsensor (23) aufweist, und
- eine Steuervorrichtung (20), welche eingerichtet ist, die Antriebseinheit (12) und das Antiblockier-System (13) steuerbar zu betätigen, und welche eingerichtet ist zur Durchführung eines Verfahrens nach einem der vorhergehenden Ansprüche.

**Claims**

1. Method for operating a two-wheeled vehicle (1),

   - wherein the two-wheeled vehicle (1) comprises a drive unit (12) and a sensor system (2),
   - wherein the sensor system (2) has a rotation rate sensor (21), an acceleration sensor (22), and a wheel speed sensor (23),
   - wherein the wheel speed sensor (23) is designed to detect at least one measurement pulse per revolution of a wheel (11) of the two-wheeled vehicle (1), and
   - wherein the method comprises the following steps:

      - detecting (51) rotation rates, in particular three-dimensional rotation rates, of the two-wheeled vehicle (1) by means of the rotation rate sensor (21),
      - detecting (52) acceleration values of the two-wheeled vehicle (1) by means of the acceleration sensor (22),
      - estimating (53) a motion state of the two-wheeled vehicle (1) on the basis of the detected rotation rates,
      - wherein the motion state comprises estimated values for estimated acceleration values and for an estimated speed and for an estimated distance covered,
      - first correcting (54) of the estimated motion state on the basis of the detected acceleration values, **characterized in that** the method furthermore comprises the following steps:

         - determining (56) an instantaneous steering angle ($\delta$) of the two-wheeled vehicle (1) on the basis of the corrected estimated motion state, and
         - actuating (58) the drive unit (12) and/or an anti-lock braking system (13) of the two-wheeled vehicle (1) as a function of the instantaneous steering angle ($\delta$) determined.

2. Method according to Claim 1, wherein actuating (58) the drive unit (12) comprises:

   - adapting a drive torque of the drive unit (12).

3. Method according to Claim 2, wherein the drive torque of the drive unit (12) is adapted on the basis of a lookup table (30) comprising a predefined drive torque profile (35) as a function of the steering angle.

4. Method according to Claim 3, wherein the drive torque profile (35) is constant up to a predefined maximum steering angle (36), in particular of a maximum of 10°, and wherein for a steering angle ($\delta$) greater than the predefined maximum steering angle (36), the drive torque profile (35) is linearly dependent on the steering angle ($\delta$).

5. Method according to any of Claims 2 to 4, furthermore comprising the following step:

   - determining an instantaneous gradient of a roadway on which the two-wheeled vehicle (1) is situated,

   wherein the drive torque of the drive unit (12) is additionally adapted as a function of the gradient.

6. Method according to any of the preceding claims, wherein actuating (58) the anti-lock braking system (13) comprises:

   - adapting a brake pressure in a brake system of the two-wheeled vehicle (1).

7. Method according to Claim 6, wherein adapting a brake pressure comprises:

   - controlling a pressure gradient of the brake pressure, in particular a sensitivity factor and/or a maximum pressure of the pressure gradient.

8. Method according to Claim 6 or 7, wherein adapting the brake pressure comprises:

   - controlling tyre slip during braking of the two-wheeled vehicle (1).

9. Method according to any of the preceding claims, furthermore comprising the following step:

   - determining (57) an instantaneous speed of the two-wheeled vehicle (1) and/or a distance covered by the two-wheeled vehicle (1) on the basis of the corrected estimated motion state.

10. Method according to any of the preceding claims, furthermore comprising the following step:

    - second correcting (55) of the estimated motion state on the basis of the measurement pulses detected by means of the wheel speed sensor (23).

11. Method according to Claim 5, wherein the second correcting (55) is carried out on the basis of the following equation:

$$\mathbf{y2} \;=\; [\mathbf{x5},\mathit{old} \;+\; 2\; \Pi\; \mathbf{r}]$$

with a corrected value for a distance y2 covered by the two-wheeled vehicle (1), an old value for a distance x5, old covered by the two-wheeled vehicle (1), and a radius r of a wheel (11) of the two-wheeled vehicle (1).

12. Method according to any of the preceding claims, wherein one or more of the following motion variables of the two-wheeled vehicle (1) are determined on the basis of the corrected estimated motion state: roll angle, pitch angle, longitudinal acceleration, and distance covered.

13. Method according to any of the preceding claims, wherein the first correcting (54) by means of a nonlinear Kalman filter.

14. Method according to any of the preceding claims, wherein estimating (53) the motion state of the two-wheeled

$$x = \begin{bmatrix} x1 \\ x2 \\ x3 \\ x4 \\ x5 \end{bmatrix}$$

vehicle (1) is effected by means of a state vector $\qquad$, with a roll angle x1, a pitch angle x2, a longitudinal

$$u = \begin{bmatrix} u1 \\ u2 \\ u3 \end{bmatrix}$$

acceleration x3, a longitudinal speed x4, and a distance x5 covered, and by means of an input vector $\qquad$, with the three-dimensional rotation rates u1, u2, and u3, and on the basis of the following system equation:

$$\dot{x} = \begin{bmatrix} u1 + \tan(x2)\sin(x1)\,u2 + \tan(x2)\cos(x1)\,u3 \\ \cos(x1)\,u2 - \sin(x1)\,u3 \\ 0 \\ x3 \\ x4 \end{bmatrix},$$

   - wherein estimating (53) the motion state of the two-wheeled vehicle (1) is effected on the basis of a calculation of an integral of the system equation $\dot{x}$,
   - wherein estimating (53) the motion state of the two-wheeled vehicle (1) is furthermore carried out on the basis of the following equations:

$$Rx = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\psi = \frac{(u2\sin(x1)+u3\cos(x1))}{\cos(x2)},$$

$$y1 = Rx\,Ry \begin{bmatrix} x3 \\ -x4\psi \\ g \end{bmatrix},$$

with a yaw rate $\psi$ of the two-wheeled vehicle (1), and the estimated acceleration values y1 of the two-wheeled vehicle (1).

15. Two-wheeled vehicle, in particular electrically driven bicycle, comprising:

- a drive unit (12),
- an anti-lock braking system (13),
- a sensor system (2) having a rotation rate sensor (21), an acceleration sensor (22), and a wheel speed sensor (23), and
- a control device (20) configured to controllably actuate the drive unit (12) and the anti-lock braking system (13), and configured to carry out a method according to any of the preceding claims.

**Revendications**

1. Procédé permettant de faire fonctionner un deux-roues (1),

- dans lequel le deux-roues (1) comprend une unité d'entraînement (12) et un système de capteurs (2),
- dans lequel le système de capteurs (2) présente un capteur de vitesse angulaire (21), un capteur d'accélération (22) et un capteur de vitesse de rotation de roue (23),
- dans lequel le capteur de vitesse de rotation de roue (23) est réalisé pour détecter au moins une impulsion de mesure à chaque tour d'une roue (11) du deux-roues (1), et
- dans lequel le procédé comprend les étapes consistant à :

    - acquérir (51) des vitesses angulaires, en particulier tridimensionnelles, du deux-roues (1) au moyen du capteur de vitesse angulaire (21),
    - acquérir (52) des valeurs d'accélération du deux-roues (1) au moyen du capteur d'accélération (22),
    - estimer (53) un état de déplacement du deux-roues (1) sur la base des vitesses angulaires acquises,
    - dans lequel l'état de déplacement comprend des valeurs d'estimation pour des valeurs d'accélération estimées et pour une vitesse estimée et pour un trajet parcouru estimé,
    - corriger une première fois (54) l'état de déplacement sur la base des valeurs d'accélération acquises, **caractérisé en ce que** le procédé comprend en outre les étapes suivantes consistant à :

        - établir (56) un angle de braquage momentané ($\delta$) du deux-roues (1) sur la base de l'état de déplacement estimé corrigé, et
        - actionner (58) l'unité d'entraînement (12) et/ou un système antiblocage (13) du deux-roues (1) en fonction de l'angle de braquage momentané ($\delta$) établi.

2. Procédé selon la revendication 1, dans lequel l'actionnement (58) de l'unité d'entraînement (12) comprend :

    - l'adaptation d'un couple d'entraînement de l'unité d'entraînement (12).

3. Procédé selon la revendication 2, dans lequel le couple d'entraînement de l'unité d'entraînement (12) est adapté sur la base d'une table de consultation (30) qui comprend une courbe de couple d'entraînement prédéfinie (35) en fonction de l'angle de braquage.

4. Procédé selon la revendication 3, dans lequel la courbe de couple d'entraînement (35) est constante jusqu'à un angle de braquage maximal prédéfini (36), en particulier égal à un maximum de 10°, et dans lequel la courbe de couple d'entraînement (35) dépend de manière linéaire de l'angle de braquage ($\delta$) pour un angle de braquage ($\delta$) supérieur à l'angle de braquage maximal prédéfini (36).

5. Procédé selon l'une quelconque des revendications 2 à 4, comprenant en outre l'étape consistant à :

   - établir une pente momentanée d'une chaussée sur laquelle se trouve le deux-roues (1),

   dans lequel le couple d'entraînement de l'unité d'entraînement (12) est de plus adapté en fonction de la pente.

6. Procédé selon l'une quelconque des revendications précédentes, dans lequel l'actionnement (58) du système antiblocage (13) comprend :

   - l'adaptation d'une pression de freinage dans un système de freinage du deux-roues (1).

7. Procédé selon la revendication 6, dans lequel l'adaptation d'une pression de freinage comprend :

   - la régulation d'un gradient de pression de la pression de freinage, en particulier d'un facteur de sensibilité et/ou d'une pression maximale du gradient de pression.

8. Procédé selon la revendication 6 ou 7, dans lequel l'adaptation de la pression de freinage comprend :

   - la régulation d'un patinage de pneu pendant un freinage du deux-roues (1).

9. Procédé selon l'une quelconque des revendications précédentes, comprenant en outre l'étape consistant à :

   - établir (57) une vitesse momentanée du deux-roues (1) et/ou un trajet parcouru par le deux-roues (1) sur la base de l'état de déplacement estimé corrigé.

10. Procédé selon l'une quelconque des revendications précédentes, comprenant en outre l'étape consistant à :

    - corriger une deuxième fois (55) l'état de déplacement estimé sur la base des impulsions de mesure détectées au moyen du capteur de vitesse de rotation de roue (23).

11. Procédé selon la revendication 5, dans lequel la deuxième correction (55) est effectuée sur la base de l'équation suivante :

$$y2 = [x5,old + 2 \, \Pi \, r]$$

avec une valeur corrigée pour un trajet parcouru y2 par le deux-roues (1), une ancienne valeur pour un trajet parcouru x5, old par le deux-roues (1), et un rayon r d'une roue (11) du deux-roues (1).

12. Procédé selon l'une quelconque des revendications précédentes, dans lequel, sur la base de l'état de déplacement estimé corrigé, une ou de plusieurs des grandeurs de déplacement suivantes du deux-roues (1) sont établies : angle de roulis, angle de tangage, accélération longitudinale et trajet parcouru.

13. Procédé selon l'une quelconque des revendications précédentes, dans lequel la première correction (54) au moyen d'un filtre de Kalman non linéaire.

14. Procédé selon l'une quelconque des revendications précédentes, dans lequel l'estimation (53) de l'état de déplacement du deux-roues (1) est effectuée au moyen d'un vecteur d'état $x = \begin{bmatrix} x1 \\ x2 \\ x3 \\ x4 \\ x5 \end{bmatrix}$ , avec un angle de roulis x1, un angle de tangage x2, une accélération longitudinale x3, une vitesse longitudinale x4 et un trajet parcouru x5, et au moyen d'un vecteur d'entrée $u = \begin{bmatrix} u1 \\ u2 \\ u3 \end{bmatrix}$, , avec les vitesses angulaires u1, u2 et u3 et sur la base de l'équation de système suivante :

$$\dot{x} = \begin{bmatrix} u1 + \tan(x2)\sin(x1)\,u2 + \tan(x2)\cos(x1)\,u3 \\ \cos(x1)\,u2 - \sin(x1)\,u3 \\ 0 \\ x3 \\ x4 \end{bmatrix},$$

- dans lequel l'estimation (53) de l'état de déplacement du deux-roues (1) est effectuée sur la base d'un calcul d'une intégrale de l'équation de système $\dot{x}$,
- dans lequel l'estimation (53) de l'état de déplacement du deux-roues (1) est en outre effectuée sur la base des équations suivantes :

$$Rx = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\psi = \frac{(u2\sin(x1) + u3\cos(x1))}{\cos(x2)},$$

$$y1 = Rx\,Ry \begin{bmatrix} x3 \\ -x4\psi \\ g \end{bmatrix}$$

avec un taux de lacet $\psi$ du deux-roues (1), et les valeurs d'accélération y1 estimées du deux-roues (1).

15. Deux-roues, en particulier vélo électrique, comprenant :

- une unité d'entraînement (12),
- un système antiblocage (13),
- un système de capteurs (2) qui présente un capteur de vitesse angulaire (21), un capteur d'accélération (22) et un capteur de vitesse de rotation de roue (23),
- un dispositif de commande (20) qui est conçu pour actionner l'unité d'entraînement (12) et le système antiblocage (13) de manière contrôlable et qui est conçu pour effectuer un procédé selon l'une quelconque des revendications précédentes.

Fig. 1

EP 4 163 177 B1

# Fig. 2

Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013215293 A1
- JP H0995287 A